# EUROPÄISCHE PATENTSCHRIFT

(11) **EP 4 010 633 B1**
(45) Veröffentlichungstag und Bekanntmachung des Hinweises auf die Patenterteilung: **13.05.2026**
(21) Anmeldenummer: 20753934.7
(22) Anmeldetag: 07.08.2020
(51) Int. Cl.: F24C 7/08

(54) **VERFAHREN ZUR VISUALISIERUNG EINER PROGRAMMPLANUNG, DIALOGSCHNITTSTELLE DAFÜR SOWIE GARGERÄT DAFÜR**
METHOD FOR VISUALISING A PROGRAMME SCHEDULE, DIALOGUE INTERFACE THEREFOR, AND COOKING APPLIANCE THEREFOR
PROCÉDÉ DE VISUALISATION D'UNE PROGRAMMATION, INTERFACE DE DIALOGUE ASSOCIÉE ET APPAREIL DE CUISSON ASSOCIÉ

(30) Priorität: 08.08.2019 DE 102019121443
(43) Veröffentlichungstag der Anmeldung: 15.06.2022
(73) Patentinhaber: Rational Aktiengesellschaft, 86899 Landsberg am Lech (DE)
(72) Erfinder: KLING, Judith, 86899 Landsberg/Lech (DE); AGAPKIN, Tanja, 86899 Landsberg/Lech (DE); SEEMÜLLER, Simon, 86899 Landsberg/Lech (DE)
(74) Vertreter: Weber-Bruls, Dorothée
(86) Internationale Anmeldenummer: PCT/EP2020/072294
(87) Internationale Veröffentlichungsnummer: WO 2021/023875

(56) Entgegenhaltungen:
- EP-A1- 2 211 117
- DE-A1- 102010 036 639

## Beschreibung

Die vorliegende Erfindung betrifft ein Verfahren zur Anordnung von visualisierten Programmen für zumindest ein Gargerät nach dem Oberbegriff von Anspruch 1, bei dem nach Auswahl von mindestens zwei Programmen aus einer Vielzahl von Programmen sowie deren zeitlichen Reihenfolge die ausgewählten Programme auf zumindest einer Anzeigeeinrichtung in einem Anzeigebereich jeweils in Form wenigstens eines einen Programm-Repräsentanten darstellenden virtuelles Bons längs einer Zeitachse zur Berücksichtigung der zeitlichen Reihenfolge angezeigt werden, wobei die Erstreckung jedes angezeigten virtuellen Bons längs der Zeitachse charakteristisch für eine Dauer des jeweils zugeordneten Programms ist. Ferner betrifft die Erfindung ein Gargerät zum Durchführen solch eines Verfahrens.

Aus der gattungsgemäßen DE 10 2010 036 639 A1 ist es bekannt, einen Repräsentanten zumindest eines Abschnitts eines in einem Gargerät durchführbaren Programms, der auch als virtueller Bon bezeichnet wird, im Anzeigebereich einer Anzeigeeinrichtung relativ zu einer für den Betrieb zumindest eines Gargeräts charakteristischen Zeitachse zum Visualisieren des Abschnitts anzuordnen, wobei zumindest eine Erstreckung des Repräsentanten parallel zur Zeitachse charakteristisch für eine Dauer des Abschnitts ist. Dabei passt sich die Erstreckung parallel zur Zeitachse an jede Änderung des Zeitbedarfs des Abschnitts während des Ablaufs desselben, die sich aus einer zu zumindest zwei, vorzugsweise einer Vielzahl von, Zeitpunkten während des Ablaufs des Abschnitts durchgeführten Bestimmung des Zeitbedarfs ergibt, zur Visualisierung der Ungenauigkeit der Bestimmung des Zeitbedarfs automatisch an. Die Relativposition zweier Repräsentanten zueinander kann entlang der Zeitachse während des Betriebs des Gargeräts automatisch in Anpassung an die Genauigkeit bei der Bestimmung des Zeitbedarfs geändert werden.

Die EP 2 211 116 B1 betrifft ein Verfahren zur Visualisierung von Programmen für Gargeräte, bei dem nach Auswahl mindestens eines Programms aus einer Vielzahl von Programmen das ausgewählte Programm auf zumindest einer Anzeigeeinrichtung in Form von wenigstens einem Programm-Repräsentanten dargestellt wird, wobei jeder Programm-Repräsentant ein virtuelles Bon umfasst, wobei ein Programm, das sich aus mehreren Abschnitten zusammensetzt, insbesondere durch ein virtuelles Bon mit mehreren Teil-Bons repräsentiert wird, und über eine Bemaßung eines virtuellen Bons oder Teil-Bons zumindest ein für die Dauer des entsprechenden Programms bzw. des entsprechenden Programm-Abschnitts charakteristischer Parameter visualisiert wird. Der Ablauf des Programms auf dem entsprechenden Bon oder der Ablauf des Programm-Abschnitts auf dem entsprechenden Teil-Bon kann dabei visualisiert werden, wie durch optische Hervorhebung zumindest eines Bereichs des Bons. Die virtuellen Bons und/oder Teil-Bons können zudem über eine Eingabeeinrichtung verändert werden, bspw. in Form einer Umplatzierung.

In der DE 10 2008 032 450 A1 ist ein Verfahren zum Verändern wenigstens einer Anzeige eines Bedienmenüs eines Gargeräts auf einer Anzeigeeinrichtung des Gargeräts nach zumindest einmaligem Betätigen einer zumindest teilweise in einem mit der Anzeigeeinrichtung zum Bereitstellen zumindest eines Eingabedisplays ausgeführten Eingabeeinrichtung des Gargeräts beschrieben. Dabei kann zumindest ein Bereich des Bedienmenüs, umfassend eine graphisch dargestellte Funktion und/oder Funktionsgruppe, eine alphanumerische Zeichenfolge, einen Bereich und/oder ein Symbol, insbesondere nach Art einer Drag- und Drop-Funktion, durch eine streichende Berührung und/oder zumindest zwei Berührungen des Eingabedisplays und/oder ein Vorbeistreichen am Eingabedisplay verschoben werden.

Die bekannten Verfahren haben sich insbesondere für das Erstellen von zeitlichen Ablaufplänen, Funktionsplänen und/oder Funktionsabläufen von Programmen für Gargeräte, bewährt. Dennoch besteht ein Bedürfnis der Weiterentwicklung zur Schließen von Planungslücken vorzugsweise unabhängig von ihrem Ursprung.

Die WO 2010/086 340 A1 sowie die dazu parallele EP 2 211 117 A1 betrifft ein Verfahren zum Anordnen von Repräsentanten von über zumindest eine Eingabeeinrichtung aus einer Vielzahl von Programmen für Gargeräte ausgewählten Programmen auf zumindest einer Anzeigeeinrichtung, die mit der Eingabeeinrichtung und einer Steuer- oder Regeleinrichtung in Wirkverbindung steht, wobei die Steuer- oder Regeleinrichtung mit einer Speichereinrichtung zum Speichern einer Vielzahl von Programmen für Gargeräte in Wirkverbindung steht und mit zumindest einem Gargerät verbunden oder von einem Gargerät bereitgestellt ist. Dabei wirkt die Steuer- oder Regeleinrichtung derart mit der Anzeigeeinrichtung zusammen, dass mindestens ein Programmrepräsentant in Form eines virtuellen Bons in einem Bereich auf einem von der Anzeigeeinrichtung angezeigten virtuellen Bonbrett angezeigt wird, nachdem es durch Berühren eines ersten Teils des Bereichs oder Annähern an besagten ersten Teil des Bereichs abgelegt und/oder durch Berühren eines zweiten Teils des Bereichs oder Annähern an besagten zweiten Teil des Bereichs und Bewegen oder Vorbeistreichen zu einem dritten Teil des Bereichs von dem zweiten in den dritten Teil verlegt und/oder durch Berühren zumindest eines vierten Teils des Bereichs oder Annäherung an oder Entfernung von besagtem vierten Teils des Bereich und/oder zumindest eine weitere Eingabehandlung in seiner optischen Darstellung verändert worden ist, wobei das virtuelle Bonbrett eine Darstellung innerhalb eines mehrdimensionalen Raumes unter Zugrundelegung eines Koordinatensystems mit zumindest zwei Positionsachsen zur Bestimmung einer Behandlungszone des Gargeräts oder zumindest einer Positionsachse zur Bestimmung einer Behandlungsebene, Behandlungsspalte oder Behandlungszeile des Garbereichs des Gargeräts und einer Zeitachse zur Bestimmung zumindest eines Zeitpunkts des Betriebs des Gargeräts ermöglicht.

Aus der DE 10 2008 032 450 A1 ist ein Verfahren zum Verändern wenigstens einer Anzeige eines Bedienmenüs eines Gargeräts auf einer Anzeigeeinrichtung des Gargeräts nach zumindest einmaligem Betätigen einer zumindest teilweise in einem mit der Anzeigeeinrichtung zum Bereitstellen zumindest eines Eingabedisplays ausgeführten Eingabeeinrichtung des Gargeräts bekannt, wobei zumindest ein Bereich des Bedienmenüs, umfassend eine graphisch dargestellte Funktion und/oder Funktionsgruppe, eine alphanumerische Zeichenfolge, einen Bereich und/oder ein Symbol, insbesondere nach Art einer Drag- und Drop-Funktion, durch eine streichende Berührung und/oder zumindest zwei Berührungen des Eingabedisplays und/oder ein Vorbeistreichen am Eingabedisplay verschoben werden kann.

Aufgabe der Erfindung ist es somit, das gattungsgemäße Verfahren derart weiterzuentwickeln, dass die Nachteile des Stands der Technik überwunden werden.

Diese Aufgabe wird durch die Merkmale des Kennzeichens von Anspruch 1 gelöst. Bevorzugte Ausführungsformen der des erfindungsgemäßen Verfahrens sind in den Ansprüchen 2 bis 21 beschrieben.

Zudem liefert die Erfindung ein Gargerät, das zum Durchführen des erfindungsgemäßen Verfahrens eingerichtet ist, nach Anspruch 22.

Es ist vorgesehen, dass eine einen Pausen-Bereich längs der Zeitachse charakterisierende zeitliche Planungslücke zwischen einem ersten Bon und einem diesen ersten Bon zeitlich nachfolgenden, zweiten Bons automatisch oder durch einen Anwender ausgelöst zumindest teilweise geschlossen wird durch Verschieben des zweiten Bons auf den ersten Bon zu, insbesondere nach links zurück entlang der sich in x-Richtung erstreckenden Zeitachse.

Mit der Erfindung wird dabei vorgeschlagen, dass jedem ausgewählten Programm ein Programm-Bereich längs der Zeitachse, insbesondere pro Garzone oder Garebene in einem Garraum des Gargeräts, zugeordnet ist, und jeder Bon in dem dazugehörenden Programm-Bereich angezeigt ist, wobei vorzugsweise die Erstreckung der Programm-Bereiche längs der Zeitachse während des Ablaufs der jeweiligen Programm konstant bleibt, und/oder vorzugsweise die Erstreckung eines Bons parallel zur Zeitachse an jede Änderung des Zeitbedarfs des jeweiligen Programms ab Auswahl und/oder während des Ablaufs desselben, die sich aus einer Anwendereingabe und/oder zu zumindest zwei, vorzugsweise einer Vielzahl von, Zeitpunkten während des Ablaufs durchgeführten Bestimmung des Zeitbedarfs ergibt, automatisch anpasst wird.

Ferner kann erfindungsgemäß vorgesehen sein, dass die Erstreckung der Programm-Bereiche längs der Zeitachse entsprechend der maximalen Dauer der jeweiligen Programme bestimmt wird, und/oder ein Bon zu einem nicht zeitgeführten Programm, wie ein kerntemperaturgeführtes Garprogramm oder ein reinigungsgradgeführtes Reinigungsprogramm, aus einem durch die minimale Zeitdauer des Programms bestimmten ersten Bereich und einem sich während des Ablaufs der Programm verkürzenden zweiten Bereich zusammengesetzt wird, wobei vorzugsweise der Bon zu Beginn des Ablaufs des durch ihn repräsentierten Programms eine die maximale Dauer des Programms charakterisierende Erstreckung längs der Zeitachse aufweist, die insbesondere der Erstreckung des Programm-Bereichs längs der Zeitachse, in dem das Bon angeordnet ist, entspricht.

Erfindungsgemäße Verfahren sind durch folgende Schritte gekennzeichnet:
a) Bestimmen des Vorliegens zumindest einer Planungslücke zwischen zwei zeitlich aufeinanderfolgenden Bons,
b) Öffnen einer Dialogschnittstelle zu der bestimmten Planungslücke, vorzugsweise zusätzlich zumindest einmaliges Anzeigen der bestimmten Planungslücke und/oder Ausgeben einer Information zu der bestimmten Planungslücke, und
c) zumindest teilweises Schließen der bestimmten Planungslücke in Abhängigkeit einer Schließungsaufforderung.

Dabei kann vorgesehen sein, dass
- der Schritt a) des Bestimmens der Planungslücke nach Auswahl der mindestens zwei Programme zu den zwei zeitlich aufeinanderfolgenden Bons und/oder während des Ablaufs derselben zu zumindest zwei, vorzugsweise einer Vielzahl von, Zeitpunkten erfolgt, und/oder
- der Schritt a) des Bestimmens der Planungslücke eine Zeitdauerbestimmung umfasst, und/oder
- der Schritt a) des Bestimmens der Planungslücke einen Vergleich mit einer minimalen Zeitdauer umfasst, und/oder
- der Schritt a) des Bestimmens der Planungslücke einen Vergleich mit einer maximalen Zeitdauer umfasst.

Mit der Erfindung wird zudem vorgeschlagen, dass
- der Schritt b) des Anzeigens der bestimmten Planungslücke eine optische Hervorhebung des sich durch die bestimmte Planungslücke ergebenden Pausen-Bereichs und/oder des sich zeitlich an die Planungslücke anschließenden und zum Planungslücken-Schließen verschiebbaren Programm-Bereichs umfasst, und/oder
- der Schritt b) des Ausgebens einer Information zu der bestimmten Planungslücke das Ausgeben einer Zeitdauer, zu dem Überschreiten der minimalen Zeitdauer und/oder zu dem Überschreiten der maximalen Zeitdauer umfasst, und/oder
- der Schritt b) des Öffnens der Dialogschnittstelle zu der bestimmten Planungslücke von der bestimmten Zeitdauer, dem bestimmten Überschreiten der minimalen Zeitdauer und/oder dem bestimmten Überschreiten der maximalen Zeitdauer abhängt, und/oder
- der Schritt b) des Öffnens der Dialogschnittstelle zu der bestimmten Planungslücke das Anzeigen und/oder optische Hervorheben zumindest eines Bedienelements, wie in Form einer Taste, zum Planungslücken-Schließen umfasst.

Dabei kann vorgesehen sein, dass
- bei bestimmtem Überschreiten der minimalen Zeitdauer eine Schließungsaufforderung automatisch generiert wird, und/oder
- bei bestimmtem Überschreiten der maximalen Zeitdauer eine Warnmeldung ausgegeben wird, vorzugsweise über die Dialogschnittstelle.

Ferner kann vorgesehen sein, dass
- die Schließungsaufforderung den Grad der Planungslücken-Schließung, die Zeitdauer der Schließung der Planungslücke und/oder den Zeitpunkt der Schließung der Planungslücke bestimmt, und/oder
- die Schließungsaufforderung den bzw. die zu verschiebenden Bon(s) und/oder den bzw. die nicht zu verschiebenden Bon(s) bestimmt, und/oder
- die Schließungsaufforderung in Abhängigkeit eines Optimierungsparameters, vorzugsweise bestimmt durch eine Zeitoptimierung, eine Ressourcenoptimierung und/oder eine Qualitätsoptimierung bestimmt wird, und/oder
- die Schließungsaufforderung in Abhängigkeit einer Ziel-Zeit und/oder einer Ist-Zeit bestimmt wird, und/oder
- die Schließungsaufforderung die Garzone(n), Garebene(n), in denen Bons zu verschieben sind, bestimmt, und/oder
- die Schließungsaufforderung von einem Default-Wert startend durch Selbstanlernen optimiert und/oder verändert wird.

Erfindungsgemäß bevorzugt ist, dass
- die Schließungsaufforderung durch Betätigen des Bedienelements ausgelöst wird, und/oder
- die Schließungsaufforderung, insbesondere nach Art einer Drag- und Drop-Funktion, durch eine Geste, ein Vorbeistreichen, eine streichende Berührung und/oder zumindest zwei Berührungen, vorzugsweise eines den Anzeigebereich anzeigenden und/oder von der Dialogschnittstelle umfassten Eingabedisplays, ausgelöst wird, wobei
   vorzugsweise zumindest eine Fanglinie am Ende der Planungslücke angezeigt wird oder die Planungslücke durch zwei Fanglinien senkrecht zu der Zeitachse begrenzt ist.

Zudem wird erfindungsgemäß vorgeschlagen, dass
- zwischen dem Schritt b) des Öffnens der Dialogschnittstelle und dem Schritt c) des zumindest teilweisen Schließens der bestimmten Planungslücke eine Information zur Zeitdauer der bestimmten Planungslücke, zur Überschreitung der minimalen Zeitdauer, zur Überschreitung der maximalen Zeitdauer, zur Veränderung der minimalen Zeitdauer, zur Veränderung der maximalen Zeitdauer, zum Grad der Schließung der Planungslücke, zur Zeitdauer der Schließung der Planungslücke und/oder zum Zeitpunkt der Schließung der Planungslücke ausgegeben, insbesondere angezeigt, und/oder abgefragt wird, vorzugsweise über das Eingabedisplay, und/oder
- zwischen dem Schritt b) des Öffnens der Dialogschnittstelle und dem Schritt c) des zumindest teilweisen Schließens der bestimmten Planungslücke eine Information zum Klima in der Garzone oder in der Garebene oder in dem Garraum, in dem die Planungslücke bestimmt wurde, eine Information zu der Betriebsart des Gargeräts, insbesondere bestimmt durch den ersten Bon und/oder den zweiten Bon, und/oder eine Information zu zumindest einem weiteren Programms, das während der bestimmten Planungslücke, insbesondere in Abhängigkeit von den zumindest zwei ausgewählten, aufeinander folgenden Programmen und/oder dem Klima und/oder der Betriebsart während der Planungslücke, während der Planungslücke durchgeführt werden kann, bestimmt und angegeben, insbesondere angezeigt, wird.

Mit der Erfindung wird auch vorgeschlagen, dass der Schritt c) des zumindest teilweisen Schließens der bestimmten Planungslücke ein zeitliches Vorverlegen aller für die Garzone, für die Garebene oder für den Garraum, in dem die Planungslücke bestimmt wurde, ausgewählten Programme umfasst.

Ferner kann vorgesehen sein, dass der erste, zweite und/oder jeder weitere Bon mit einem Attribut belegt werden kann, insbesondere über die Dialogschnittstelle, wobei vorzugsweise das Attribut bestimmt wird durch eine Zeit, Kosten und/oder Ressourcen.

Dabei kann wiederrum vorgesehen sein, dass durch das Zeit-Attribut ein Bon zeitlich fixiert werden kann, so dass es nicht längs der Zeitachse verschoben werden kann, und/oder durch das Kosten-Attribut das Bestimmen der Schließungsaufforderung kostenoptimiert erfolgt, wie zum minimalen Gewichtsverlust von Gargut, zum minimalen Energieverbrauch, zur minimalen Garraumverdreckung oder zum minimalen Reinigungsmittelverbrauch, und/oder durch das Ressourcen-Attribut das Bestimmen der Schließungsaufforderung ressourcenoptimiert erfolgt, wie zum minimalen Strom-, Wasser- und/oder Chemieverbrauch.

Vorgeschlagen wird auch, dass der erste, zweite und/oder jeder weitere Bon jeweils repräsentativ für ein Garprogramm, ein Reinigungsprogramm, ein Vorheizprogramm, ein Abkühlprogramm, ein Diagnoseprogramm oder Pausenprogramm ist.

Es kann eine Vielzahl an Planungslücken vorliegen, die vorzugsweise alle bestimmt, angezeigt und geschlossen werden können.

Dabei kann vorgesehen sein, dass aus der Vielzahl an Planungslücken zumindest eine zu schließende Planungslücke ausgewählt werden kann, vorzugsweise über die Dialogschnittstelle.

Ferner kann vorgesehen sein, dass beim Schließen zumindest einer der Planungslücken aus der Vielzahl an Planungslücken zumindest eine weitere Planungslücke aus der Vielzahl an Planungslücken berücksichtigt werden kann, vorzugsweise nach Auswahl über die die Dialogschnittstelle.

Die Erfindung betrifft des Weiteren eine Dialogschnittstelle, die zum Durchführen eines erfindungsgemäßen Verfahrens eingerichtet ist, wobei die Dialogschnittstelle von dem Gargerät oder einer Fernbedienung für das Gargerät bereitgestellt ist.

Schließlich betrifft die Erfindung auch ein Gargerät, das zum Durchführen eines erfindungsgemäßen Verfahrens eingerichtet ist und eine Anzeigeeinrichtung mit einem Anzeigebereich für jede Garzone oder Garebene in einem Garraum, getrennt voneinander oder gemeinsam, umfasst.

Programmplanungen sind für die Großküche von großer Bedeutung. Sie fordern dabei eine Optimierung eines Ablaufplans für die in einem jeden Gargerät abzulaufenden Programme, meist in mehrfacher Hinsicht, wie betreffend der Zeit, Kosten und Ressourcen.

In einem Ablaufplan, der im Anzeigebereich einer Anzeigeeinrichtung relativ zu einer für den Betrieb zumindest eines Gargeräts charakteristischen Zeitachse (x-Ache) angezeigt wird, können zur Zeitoptimierung vertikal parallel verlaufende Linien (y-Achse) zur Veranschaulichung von Zeitspannen dargestellt sein. Diese Linien können durchgängig, unterbrochen oder sonst wie dargestellt sein. Die Anzeige kann permanent, wechselnd oder als Lauflinie erfolgen.

Bons können mit Attributen belegt werden. So kann ein sogenannter "Fixbon" zeitlich fixiert sein, so dass er nicht verschoben werden kann. Dies kann durch ein Anpinnungssymbol veranschaulicht werden. Andere Attribute können Kosten (Dollar/Eurozeichen) oder Ressourcen (Strom /Wasser/Chemiesymbol) sein. Bons können sowohl ein Garprogramm, ein Reinigungsprogramm oder ein Diagnoseprogramm repräsentieren oder als Leerbon (geplante Pause) oder als Repräsentant sonstiger Funktionen (Vorheizen, Vor- Nacharbeit) wirken.

Planungslücken können unterschiedliche Ursachen haben, wie z. B.
a. generelle Voreinstellung mit z.B. Lückendauer > 3min,
b. durch Anwender eingestellte Dauer von Programmen oder Lücken dazwischen,
c. durch Anwender gewählter Start- oder Endzeiten,
d. Ein/Aus-Schaltung einer Gargeräte-Funktion, und/oder
e. Anpassung von kerntemperaturgesteuerten Garprozessen.

Eine Planungslücke kann nur einmal pro Programmablauf angezeigt werden oder solange wie vorliegend, je nach Einstellung durch den Anwender. Sie können auf unterschiedliche Weisen angezeigt werden:
1) Durch eine Taste in einer Zeile bei einem 2 dimensionalen Anzeigebereich oder eine Ebene bei einer 3 dimensionalen Anzeigebereich;
2) eine separate Taste im Bedienfeld, z.B. rechts unten, die nur bei festgestellter Planungslücke erscheint;
3) ein sich separat öffnendes sogenanntes Messengerfeld/Dialogfeld;
4) durch zwei Linien im Anzeigebereich, insbesondere über das gesamte Achsen-/Zeitdiagramm, um anzuzeigen, dass der Lückenbereich zwischen den Linien liegt; und/oder
5) durch Schraffur, Farbe, Aufleuchten und/oder anderweitige optische Hervorhebung von Lückenbereichen oder Nachbarbereichen davon, insbesondere eines Bereichs/ Teilbereichs rechts von der Lücke längs der Zeitachse (= in der Zukunft liegende Bons) zur Visualisierung von Veränderungsmöglichkeiten.

Planungslücken lassen sich auf vielfältige Weise schließen, wie
i) durch eine einfache Wischgeste, wobei bei einem Wischen von rechts nach links sich z.B. eine Planungslücke schließt, indem alles was rechts ist nach links verschoben wird;
ii) durch Drücken einer oder mehrerer Tasten; und/oder
iii) nach Abfrage von Parametern in einem Dialogfenster.

Ein Dialogfeld ermöglicht diverse Abfragen, bspw. optional, wie folgende Abfragen:
A) Welche Planungslücke soll verschoben werden, bestimmt durch z.B. eine Garraumebene;
B) wohin soll die Planungslücke verschoben werden, wobei maximal ein komplettes Schließen bis tLücke=0 oder nur ein Teilschließen mit tLücke >0 und>tLücke max möglich ist;
C) soll eine (neue) Zeitachse gesetzt werden, oder findet nur eine Relativverschiebung statt;
D) soll das Schließen nach einem Parameter erfolgen, z.B. zeitoptimiert, qualitäts- oder gewichtsverlustoptimiert, wobei dazu Bons auch verlängert und Klima im zulässigen Rahmen verändert werden könne;
E) soll eine Auswahl markiert werden, wie durch Setzen eines Hakens oder dergleichen; und/oder
F) soll ein Schließen und/oder Verschieben von Planungslücken dokumentiert werden, insbesondere gespeichert werden, und falls ja, wie und wo; und/oder
G) soll ein Selbstanlernen stattfinden?

Ein Dialogbaum kann bspw. wie folgt ablaufen:
1. Soll eine Planungslücke geschlossen werden?
2. Nein bedeutet, dass kein Lückenschliessen stattfinden soll, und Ja bedeutet, dass eine Lückenschließung stattfinden soll. Bei einer oder beiden Alternativen kann zusätzlich ein Dialogfeld gestartet werden. Das Dialogfeld kann dabei verschiedene Optionen abfragen. Bei "Nein" kann z.B. angefragt werden, ob:
   a. das Klima im Garraum und/oder der Betriebsmodus des Gargeräts beibehalten oder geändert werden soll;
   b. das Klima im Garraum und/oder der Betriebsmodus des Gargeräts des nächsten Bons erzeugt werden soll;
   c. eine Zwischenreinigung bei ausreichender Zeit in einer Planungslücke durchgeführt werden soll; und/oder
   d. eine Timer mit ablaufender Lückenzeit angezeigt werden soll?

Weitere Merkmale und Vorteile der Erfindung ergeben sich aus der nachfolgenden Beschreibung von Ausführungsbeispielen der Erfindung anhand schematischer Zeichnungen. Dabei zeigen:
- Figuren 1a bis 1c: einen ersten Ablaufplan für eine einzige Garebene zum nacheinander Garen von Fleisch und Geflügel; und
- Figuren 2a und 2b: einen zweiten Ablaufplan für eine Mehrzahl von Garebenen zum nacheinander Garen von Geflügel und Beilagen.

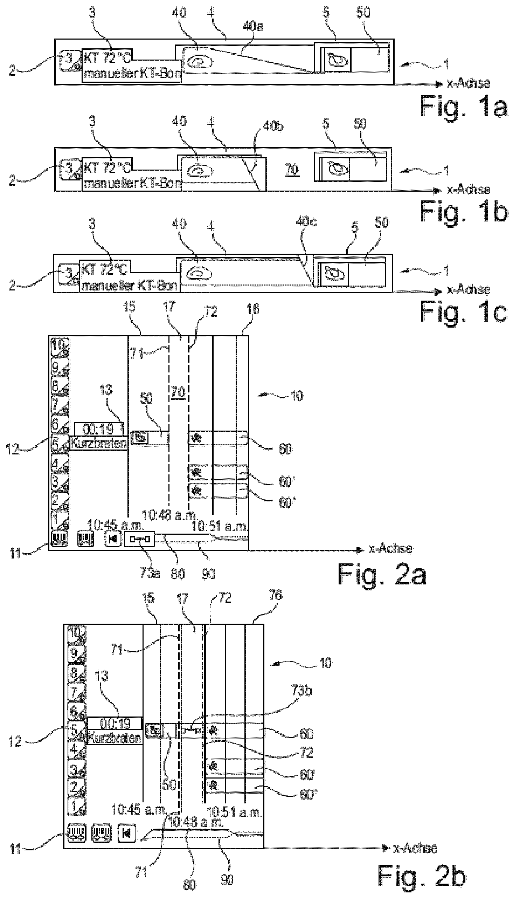

Die Figuren 1a bis 1c veranschaulichen die Auswirkung eines kerntemperaturgesteuerten Garprogramms auf eine Zeitplanung. Solche Garprogramme weisen grundsätzlich eine Unschärfe in der zu planenden Restzeit auf, da das Kalibergröße und die Ausgangstemperatur des Garguts, z.B. in Form von Fleisch, nicht bekannt sind. Diese Unschärfe führt dazu, dass es üblich ist, eine gemittelten Default-Restzeit zu Grunde zu legen und über eine Bon-Schräge die Ungenauigkeit des Garendzeitpunktes zu verdeutlichen. Weitere Garprogramme, wie zum Geflügel-Garen, können demnach erst im Anschluss an die maximal geplante Zeit für das Garen des Fleischs platziert werden.

Die Figuren 1a bis 1c zeigen dabei jeweils einen Anzeigebereich 1 für ein nicht gezeigtes Gargerät mit einem Ebenen-Informationsbereich 2, einem Klima- und Garprozess-Informationsbereich 3 und zwei Garprogramm-Bereichen 4, 5. Dabei sind längs einer Zeitachse, die der x-Achse in den Figuren 1a bis 1c entspricht, im ersten Garprogramm-Bereich 4 ein Fleisch-Bon 40 als Repräsentant für ein Fleisch-Garprogramm und im zweiten Garprogramm-Bereich 5 ein Geflügel-Bon 50 als Repräsentant für ein Geflügel-Garprogramm abgelegt. Da das Fleisch kerntemperaturgesteuert gegart wird, ist der Fleisch-Bon 50 mit einer Bon-Schräge 40a, 40b, 40c versehen. Dabei veranschaulicht die flache Schräge des Fleisch-Bons 40 in Figur 1a den Beginn des Fleischgarens, zu dem die Unschärfe der Restzeit maximal ist. Während des Garens aktualisiert sich die Restzeit und die Bon-Schrägen 40b, 40c werden steiler, wie in den Figuren 1b und 1c angedeutet, da die Bestimmung der Restzeit immer besser wird. Zu weiteren Details betreffend die Änderung des Fleisch-Bons 40 während des Ablaufs des entsprechenden Fleisch-Garprogramms, das kerntemperaturgeführt ist, wird sich auf den Offenbarungsgehalt der DE 10 2010 036 639 A1 der Anmelderin bezogen.

Es ändert sich in den Figuren 1b und 1c die Position der Bons 40, 50, die in dem durch den jeweiligen Garprogramm-Bereich 4, 5 bestimmten Zeitfenster angeordnet sind, nicht automatisch. Es erfolgt also kein automatisches "Nachrücken" des Geflügel-Bons 50 nach links, da es denkbar ist, dass es eine Wunsch-Ausgabezeit für das gegarte Geflügel gibt, die nicht zu verändern ist. Gibt es solch eine Zeitvorgabe nicht, kann ein "Nachrücken" und somit ein Planungslücken-Schließen z.B. durch aktiven Zug eines Anwenders des Geflügel-Bons 50 nach links erfolgen, so dass es sich dem Fleisch-Bon 40 direkt anschließt, was jedoch nicht dargestellt ist. Dabei ist alternative oder auch zusätzlich zu dem Zug auch eine Wischbewegung oder ein Tastendrücken möglich.

Selbstverständlich können Planungslücken bei einem Gargerät mit vielen Garebenen, in jeder der Garebenen auftreten. Eine Planungslücke muss nicht nur von einem ausgewählten Garprogramm abhängen, sondern kann auch von einem Anwender erzwungen werden, z.B. durch aktives Garprogramm-Verkürzen/Abbrechen oder durch Entfernen eines Garprogramms aus der Planung.

Kommt es im Laufe des Garens in einem Gargerät mit einer Vielzahl von Garebenen oder während der Planung desselben zu einer Verkürzung eines Bons, sei es durch Anwendereingriff oder Programmbedingt, so kann zuerst geprüft werden, ob die Verkürzung eine vorgegebene Mindestzeitdauer überschreitet und ggf. in welcher/welchen Garebene(n). Liegt eine Verkürzung über alle mit Gargut bestückte bzw. zu bestückende Garebenen um zumindest die Mindestzeitdauer vor, kann das Vorliegen solch einer Planungslücke visuell wahrnehmbar gemacht werden, z.B. durch Einblenden einer Taste. Das Planungslücken-Schließen kann dann auf Wunsch des Anwenders sattfinden, und zwar durch eine einfache Bedienung, nämlich Tasten-Drücken.

Solch eine Konstellation ist in den Figuren 2a und 2b dargestellt. Zu sehen ist dabei jeweils ein Anzeigebereich 10 für ein nicht gezeigtes Gargerät mit einem Garraum-Informationsbereich 11 und einer der Anzahl an Garebenen des Gargeräts entsprechenden Anzahl an Ebenen-Informationsbereichen 12. Der in dem gezeigten Beispiel mit Geflügel bestückten Garebene 5 sind dabei ein Ebenen-Informationsbereich 12, ein Klima- und Garprozess-Informationsbereich 13 und ein erster Garprogramm-Bereich 15 zugeordnet, dem ein Pausen-Bereich 17 folgt, an den sich mit Beilage zu bestückende zweite Garprogramm-Bereiche 16 für die Garebenen 5, 3 und 2 anschließen. Die Bestückung ist mit Bons 50, 60, 60', 60" veranschaulicht. Der Bon-Bestückung ist zu entnehmen, dass um 10:45 Uhr das Garen von Geflügel in der Garebene 5 gestartet hat und um 10:51 Uhr in den Garebenen 5, 3 und 2 das Garen von Beilagen stattfinden soll, siehe den Geflügel-Bon 50 und die 3 Beilagen-Bons 60, 60', 60''. Zwischen einerseits dem Geflügel-Bon 50 und andererseits den 3 Beilagen-Bons 60, 60', 60" ist eine Planungslücke 70 durch zwei vertikal verlaufende Linien 71, 72 dargestellt. Da diese Planungslücke 70 eine Mindestzeitdauer übersteigt, ist in den Figuren 2a und 2b auch jeweils eine Taste 73a, 73b zum Planungslücken-Schließen dargestellt.

Die Taste 73a zum Planungslücken-Schließen ist bei der Variante der Figur 2a unterhalb der Ebenen-Informationsbereiche 12 für alle 10 Garebenen dargestellt, und zwar im Garraum-Informationsbereich 11, in dem auch ein Temperatur-Graph 80 und ein Feuchte-Graph 90 zur Veranschaulichung des Klimas im Garraum zu sehen sind. Bei der Variante der Figur 2b ist die Taste 73b zum Planungslücken-Schließen zwischen den beiden Linien 71, 72 in der Höhe der Garebene 5, in der das Geflügel gegart wird, dargestellt.

Sobald eine Detektion der Länge der Planungslücke 70, und zwar in den mit Gargut zu bestückenden Garebenen 5, 3 und 2 durchgeführt und bestimmt wurde, dass durch diese eine Mindestzeitdauer überschritten wird, wird der Anwender durch Aufscheinen der Taste 73a zum Planungslücken-Schließen in Figur 2a oder der Taste 73b zum Planungslücken-Schließen in Figur 2b darauf aufmerksam gemacht, dass durch Drücken eben dieser Taste die Planungslücke geschlossen werden kann, und zwar insgesamt. Beim Planungslücken-Schließen findet dann ein Verschieben des kompletten Blocks an Beilagen-Bons 60, 60', 60" statt. Dabei werden die dem Geflügel-Bon 50 folgenden 3 Beilagen-Bons 60, 60', 60'' nach links in Figur 2a bzw. 2b verschoben, was jedoch nicht dargestellt ist. Hierdurch kommt es zu keinen neuen Garprogramm-Kombinationen, sondern lediglich zu einer zeitlichen Verschiebung nach vorne, also zu einer Zeitoptimierung, die gleichzeitig auch Energie spart.

Alternative ist es auch möglich, dass bei der Funktionsplanung und beim Garen stets ein automatischen "Nachrücken" stattfindet, so dass also grundsätzlich keine Planungslücken aufscheinen. Dabei kann das "Nachrücken" in ausgewählten Garebenen oder in allen Garebenen und/oder zu allen Zeiten oder zu bestimmten Zeiten stattfinden. Es kann auch gezielt ein "Nachrücken" ausgeschlossen werden, bspw. durch Markierung von bestimmten Garpfaden, da sie z.B. auf eine bestimmte Zielzeit geplant sind, oder durch Setzen zumindest eines sogenannten "Fixbon", der zeitlich fixiert und somit nicht verschiebbar ist, um bspw. Pausenzeiten in einer Großküche einzuplanen.

### Bezugszeichenliste

- 1: Anzeigebereich
- 2: Ebenen-Informationsbereich
- 3: Klima- und Garprozess-Informationsbereich
- 4: Garprogramm-Bereich
- 5: Garprogramm-Bereich
- 6: Garprogramm-Bereich
- 10: Anzeigenbereich
- 11: Garraum-Informationsbereich
- 12: Ebenen-Informationsbereich
- 13: Klima- und Garprozess-Informationsbereich
- 15: Garprogramm-Bereich
- 16: Garprogramm-Bereich
- 17: Pausen-Bereich
- 40: Fleisch-Bon
- 40a, 40b, 40c: Bon-Schräge
- 50: Geflügel-Bon
- 60, 60', 60": Beilagen-Bon
- 70: Planungslücke
- 71: Linie
- 72: Linie
- 73a, 73b: Taste zum Planungslücken-Schließen
- 80: Temperatur-Graph
- 90: Feuchte-Graph

## Patentansprüche

1. Verfahren zur Anordnung von visualisierten Programmen für zumindest ein Gargerät längs einer sich in x-Richtung nach rechts erstreckenden Zeitachse, bei dem
nach Auswahl von mindestens zwei Programmen aus einer Vielzahl von Programmen sowie deren zeitlichen Reihenfolge die ausgewählten Programme auf zumindest einer Anzeigeeinrichtung in einem Anzeigebereich (1, 10) jeweils in Form wenigstens eines einen Programm-Repräsentanten darstellenden virtuelles Bons (40, 50, 60, 60', 60") längs der Zeitachse zur Berücksichtigung der zeitlichen Reihenfolge angezeigt werden, und
wobei die Erstreckung jedes angezeigten virtuellen Bons (40, 50, 60, 60', 60") längs der Zeitachse charakteristisch für eine Dauer des jeweils zugeordneten Programms ist, **dadurch gekennzeichnet, dass**
eine einen Pausen-Bereich (17) längs der Zeitachse charakterisierende zeitliche Planungslücke (70) zwischen einem ersten Bon (40, 50) und einem diesen ersten Bon (40, 50) zeitlich nachfolgenden, zweiten Bons (50, 60, 60', 60") automatisch oder durch einen Anwender ausgelöst zumindest teilweise geschlossen wird durch Verschieben des zweiten Bons (50, 60, 60', 60") auf den ersten Bon (40, 50) zu, und zwar nach links zurück entlang der sich in x-Richtung erstreckenden Zeitachse, durch folgende Schritte:
a) Bestimmen des Vorliegens zumindest einer Planungslücke (70) zwischen zwei zeitlich aufeinanderfolgenden Bons (40, 50, 60, 60', 60"),
b) Öffnen einer Dialogschnittstelle zu der bestimmten Planungslücke (70), und
c) zumindest teilweises Schließen der bestimmten Planungslücke (70) in Abhängigkeit einer Schließungsaufforderung, wobei
• die Schließungsaufforderung die Garzone(n), Garebene(n), in denen Bons (60, 60', 60'') zu verschieben sind, bestimmt,
• die Schließungsaufforderung in Abhängigkeit eines Optimierungsparameters bestimmt wird, so dass
der Schritt c) des zumindest teilweisen Schließens der bestimmten Planungslücke (70) ein zeitliches Vorverlegen aller für die Garzone, für die Garebene oder für den Garraum, in dem die Planungslücke (70) bestimmt wurde, ausgewählten Programme zeitoptimiert, qualitäts- oder gewichtsverlustoptimiert umfasst.

2. Verfahren nach Anspruch 1, **dadurch gekennzeichnet, dass**
jedem ausgewählten Programm ein Programm-Bereich (4, 5, 15, 16) längs der Zeitachse zugeordnet ist, und
jeder Bon (40, 50, 60, 60', 60") in dem dazugehörenden Programm-Bereich (4, 5, 15, 16) angezeigt ist, wobei
• die Erstreckung der Programm-Bereiche (4, 5, 15, 16) längs der Zeitachse während des Ablaufs der jeweiligen Programm-Bereiche konstant bleibt, oder
• die Erstreckung eines Bons (40) parallel zur Zeitachse an jede Änderung des Zeitbedarfs des jeweiligen Programms ab Auswahl und/oder während des Ablaufs desselben, die sich aus einer Anwendereingabe und/oder zu zumindest zwei Zeitpunkten während des Ablaufs durchgeführten Bestimmung des Zeitbedarfs ergibt, automatisch angepasst wird.

3. Verfahren nach Anspruch 2, **dadurch gekennzeichnet, dass**
die Erstreckung der Programm-Bereiche (4, 5, 15, 16) längs der Zeitachse entsprechend der maximalen Dauer der jeweiligen Programme bestimmt wird, oder ein Bon (40) zu einem nicht zeitgeführten Programm aus einem durch die minimale Zeitdauer des Programms bestimmten ersten Bereich und einem sich während des Ablaufs der Programm-Bereiche verkürzenden zweiten Bereich zusammengesetzt wird.

4. Verfahren nach Anspruch 3, **dadurch gekennzeichnet, dass**
der Bon (40) zu Beginn des Ablaufs des durch ihn repräsentierten Programms eine die maximale Dauer des Programms charakterisierende Erstreckung längs der Zeitachse aufweist.

5. Verfahren nach einem der vorangehenden Ansprüche, **dadurch gekennzeichnet, dass** der Schritt a) des Bestimmens der Planungslücke (70) nach Auswahl der mindestens zwei Programme zu den zwei zeitlich aufeinanderfolgenden Bons und/oder während des Ablaufs derselben zu zumindest zwei, vorzugsweise einer Vielzahl von, Zeitpunkten erfolgt.

6. Verfahren nach einem der vorangehenden Ansprüche, **dadurch gekennzeichnet, dass**
• der Schritt a) des Bestimmens der Planungslücke (70) eine Zeitdauerbestimmung umfasst, oder
• der Schritt a) des Bestimmens der Planungslücke (70) einen Vergleich mit einer minimalen Zeitdauer umfasst, /oder
• der Schritt a) des Bestimmens der Planungslücke (70) einen Vergleich mit einer maximalen Zeitdauer umfasst.

7. Verfahren nach einem der vorangehenden Ansprüche, **dadurch gekennzeichnet, dass** der Schritt b) ein Anzeigen der bestimmten Planungslücke (70) umfasst, vorzugsweise durch eine optische Hervorhebung des sich durch die bestimmte Planungslücke (70) ergebenden Pausen-Bereichs (17) und/oder des sich zeitlich an die Planungslücke (70) anschließenden und zum Planungslücken-Schließen verschiebbaren Programm-Bereichs (16) umfasst.

8. Verfahren nach einem der vorangehenden Ansprüche, **dadurch gekennzeichnet, dass** der Schritt b) ein Ausgeben einer Information zu der bestimmten Planungslücke (70) umfasst, vorzugsweise in Form des Ausgebens einer Zeitdauer, zu dem Überschreiten der minimalen Zeitdauer und/oder zu dem Überschreiten der maximalen Zeitdauer umfasst.

9. Verfahren nach einem der vorangehenden Ansprüche, **dadurch gekennzeichnet, dass** der Schritt b) des Öffnens der Dialogschnittstelle zu der bestimmten Planungslücke (70) von der bestimmten Zeitdauer, dem bestimmten Überschreiten der minimalen Zeitdauer und/oder dem bestimmten Überschreiten der maximalen Zeitdauer abhängt.

10. Verfahren nach einem der vorangehenden Ansprüche, **dadurch gekennzeichnet, dass** der Schritt b) des Öffnens der Dialogschnittstelle zu der bestimmten Planungslücke (70) das Anzeigen und/oder optische Hervorheben zumindest eines Bedienelements zum Planungslücken-Schließen umfasst.

11. Verfahren nach einem der Ansprüche 8 bis 10, **dadurch gekennzeichnet, dass**
• bei bestimmtem Überschreiten der minimalen Zeitdauer eine Schließungsaufforderung automatisch generiert wird, und/oder
• bei bestimmtem Überschreiten der maximalen Zeitdauer eine Warnmeldung ausgegeben wird, vorzugsweise über die Dialogschnittstelle.

12. Verfahren nach einem der vorangehenden Ansprüche, **dadurch gekennzeichnet, dass** die Schließungsaufforderung den Grad der Planungslücken-Schließung, die Zeitdauer der Schließung der Planungslücke und/oder den Zeitpunkt der Schließung der Planungslücke bestimmt.

13. Verfahren nach einem der vorangehenden Ansprüche, **dadurch gekennzeichnet, dass** die Schließungsaufforderung den bzw. die zu verschiebende(n) Bons (60, 60', 60") und/oder den bzw. die nicht zu verschiebenden Bon(s) bestimmt.

14. Verfahren nach einem der vorangehenden Ansprüche, **dadurch gekennzeichnet, dass** die Schließungsaufforderung in Abhängigkeit einer Ziel-Zeit und/oder einer Ist-Zeit bestimmt wird.

15. Verfahren nach einem der vorangehenden Ansprüche, **dadurch gekennzeichnet, dass** die Schließungsaufforderung von einem Default-Wert startend durch Selbstanlernen optimiert und/oder verändert wird.

16. Verfahren nach einem der vorangehenden Ansprüche, **dadurch gekennzeichnet, dass**
• die Schließungsaufforderung durch Betätigen des Bedienelements ausgelöst wird, und/oder
• die Schließungsaufforderung durch eine Geste, ein Vorbeistreichen, eine streichende Berührung und/oder zumindest zwei Berührungen ausgelöst wird.

17. Verfahren nach Anspruch 16, **dadurch gekennzeichnet, dass** zumindest eine Fanglinie (72) am Ende der Planungslücke (70) angezeigt wird oder die Planungslücke (70) durch zwei Fanglinien (71, 72) senkrecht zu der Zeitachse begrenzt ist.

18. Verfahren nach einem der vorangehenden Ansprüche, **dadurch gekennzeichnet, dass**
der erste, zweite und/oder jeder weitere Bon (40, 50, 60, 60', 60") mit einem Attribut belegt werden kann, wobei das Attribut bestimmt wird durch eine Zeit, Kosten und/oder Ressourcen.

19. Verfahren nach Anspruch 20, **dadurch gekennzeichnet, dass**
durch das Zeit-Attribut ein Bon zeitlich fixiert werden kann, so dass es nicht längs der Zeitachse verschoben werden kann.

20. Verfahren nach einem der vorangehenden Ansprüche, **dadurch gekennzeichnet, dass** eine Vielzahl an Planungslücken (70) vorliegt, und
aus der Vielzahl an Planungslücken (70) zumindest eine zu schließende Planungslücke ausgewählt werden kann.

21. Verfahren nach Anspruch 20, **dadurch gekennzeichnet, dass**
beim Schließen zumindest einer der Planungslücken aus der Vielzahl an Planungslücken (70) zumindest eine weitere Planungslücke aus der Vielzahl an Planungslücken (70) berücksichtigt werden kann.

22. Gargerät, das zum Durchführen eines Verfahrens nach einem der Ansprüche 1 bis 21 eingerichtet ist, umfassend eine Anzeigeeinrichtung mit einem Anzeigebereich (1, 10) für jede Garzone oder Garebene in einem Garraum getrennt voneinander oder gemeinsam.

## Claims

1. A method for positioning visualised programmes for at least one cooking appliance along a time axis extending to the right in the x-direction, in which, after selection of at least two programmes from a plurality of programmes and their temporal order, the selected programmes are displayed on at least one display device in a display area (1, 10) in each case in the form of at least one virtual receipt (40, 50, 60, 60', 60") representing a programme representative along the time axis to take account of the temporal order, and
wherein the extension of each displayed virtual receipt (40, 50, 60, 60', 60") along the time axis is characteristic of a duration of the respectively allocated programme, **characterised in that**
a time scheduling gap (70) characterizing a pause area (17) along the time axis between a first receipt (40, 50) and a second receipt (50, 60, 60', 60") which follows this first receipt (40, 50) in time is at least partially closed automatically or triggered by a user by moving the second receipt (50, 60, 60', 60") towards the first receipt (40, 50) and namely back to the left along the time axis extending in the x-direction, **characterised by** the following steps:
a) determining the presence of at least one scheduling gap (70) between two temporally consecutive receipts (40, 50, 60, 60', 60"),
b) opening a dialogue interface with the determined scheduling gap (70), and
c) at least partially closing the determined scheduling gap (70) as a function of a closure request, wherein
• the closure request determines the cooking zone(s), cooking level(s) in which receipts (60, 60', 60") are to be moved,
• the closure request is determined as a function of an optimisation parameter, so that
the step c) of at least partially closing the determined scheduling gap (70) comprises bringing forward in time all the programmes selected for the cooking zone, for the cooking level or for the cooking chamber in which the scheduling gap (70) was determined in a manner optimised in terms of time, quality or weight loss.

2. The method according to Claim 1, **characterised in that**
each selected programme is allocated a programme area (4, 5, 15, 16) along the time axis, and
each receipt (40, 50, 60, 60', 60") is displayed in the associated programme area (4, 5, 15, 16), wherein
• the extension of the programme areas (4, 5, 15, 16) along the time axis remains constant during the running of the respective programme areas, or
• the extension of a receipt (40) parallel to the time axis is automatically adapted to any change in the time requirement of the respective programme from the time of selection and/or during its running resulting from a user input and/or determination of the time requirement carried out at at least two points in time during the running.

3. The method according to Claim 2, **characterised in that**
the extension of the programme areas (4, 5, 15, 16) along the time axis is determined according to the maximum duration of the respective programmes, or a receipt (40) for a non-time-guided programme is composed of a first area determined by the minimum duration of the programme and a second area which shortens during the running of the programme areas.

4. The method according to Claim 3, **characterised in that**
the receipt (40), at the beginning of the running of the programme represented by it, has an extension along the time axis characterizing the maximum duration of the programme.

5. The method according to any one of the preceding claims, **characterised in that**
the step a) of determining the scheduling gap (70) takes place after selection of the at least two programmes at the two temporally consecutive receipts and/or during the running of the same at at least two, preferably a plurality of points in time.

6. The method according to any one of the preceding claims, **characterised in that**
• the step a) of determining the scheduling gap (70) comprises a duration determination, or
• the step a) of determining the scheduling gap (70) comprises a comparison with a minimum time period, /or
• the step a) of determining the scheduling gap (70) comprises a comparison with a maximum time period.

7. The method according to any one of the preceding claims, **characterised in that**
the step b) comprises displaying the determined scheduling gap (70), preferably by a visual highlighting of the pause area (17) resulting from the determined scheduling gap (70) and/or the programme area (16) which temporally adjoins the scheduling gap (70) and can be moved in order to close scheduling gaps.

8. The method according to any one of the preceding claims, **characterised in that**
the step b) comprises outputting information on the determined scheduling gap (70), preferably in the form of outputting a time duration, exceeding the minimum time duration and/or exceeding the maximum time duration.

9. The method according to any one of the preceding claims, **characterised in that**
the step b) of opening the dialogue interface with the determined scheduling gap (70) depends on the determined time duration, the determined exceeding of the minimum time duration and/or the determined exceeding of the maximum time duration.

10. The method according to any one of the preceding claims, **characterised in that**
the step b) of opening the dialogue interface with the determined scheduling gap (70) comprises displaying and/or visually highlighting at least one control element in order to close scheduling gaps.

11. The method according to any one of Claims 8 to 10, **characterised in that**
• a closure request is automatically generated when it is determined that the minimum time duration has been exceeded, and/or
• a warning message is issued when it is determined that the maximum time duration has been exceeded, preferably via the dialogue interface.

12. The method according to any one of the preceding claims, **characterised in that**
the closure request determines the degree of the scheduling gap closure, the duration of the scheduling gap closure and/or the timing of the scheduling gap closure.

13. The method according to any one of the preceding claims, **characterised in that**
the closure request determines the receipt(s) (60, 60', 60") to be moved and/or the receipt(s) not to be moved.

14. The method according to any one of the preceding claims, **characterised in that**
the closure request is determined depending on a target time and/or an actual time.

15. The method according to any one of the preceding claims, **characterised in that**
the closure request is optimised and/or changed by self-learning, starting from a default value.

16. The method according to any one of the preceding claims, **characterised in that**
• the closure request is triggered by operating the control element, and/or
• the closing request is triggered by a gesture, a swipe past, a swipe touch and/or at least two touches.

17. The method according to Claim 16, **characterised in that**
at least one trap line (72) is displayed at the end of the scheduling gap (70), or the scheduling gap (70) is delimited by two trap lines (71, 72) perpendicular to the time axis.

18. The method according to any one of the preceding claims, **characterised in that**
an attribute can be assigned to the first, second and/or each further receipt (40, 50, 60, 60', 60"), wherein the attribute is determined by a time, costs and/or resources.

19. The method according to Claim 20, **characterised in that**
the time attribute can be used to fix a receipt in time so that it cannot be moved along the time axis.

20. The method according to any one of the preceding claims, **characterised in that**
a plurality of scheduling gaps (70) exists, and
at least one scheduling gap to be closed can be selected from the plurality of scheduling gaps (70).

21. The method according to Claim 20, **characterised in that**
when closing at least one of the scheduling gaps from the plurality of scheduling gaps (70), at least one further scheduling gap from the plurality of scheduling gaps (70) can be taken into account.

22. A cooking appliance designed for carrying out a method according to any one of Claims 1 to 21, comprising a display device with a display area (1, 10) for each cooking zone or cooking level in a cooking chamber, either separately or together.

## Revendications

1. Procédé d'agencement de programmes visualisés pour au moins un appareil de cuisson le long d'un axe temporel s'étendant vers la droite dans la direction x, dans lequel, après 1a sélection d'au moins deux programmes parmi une pluralité de programmes ainsi que de leur ordre chronologique, les programmes sélectionnés sont affichés sur au moins un dispositif d'affichage dans une zone d'affichage (1, 10), chacun sous la forme d'au moins un ticket (40, 50, 60, 60', 60") virtuel constituant une représentation d'un programme le long de l'axe temporel afin de prendre en compte l'ordre chronologique, et
dans lequel l'étendue de chaque ticket (40, 50, 60, 60', 60") virtuel affiché le long de l'axe temporel est caractéristique d'une durée du programme respectivement associé, **caractérisé en ce que**
un intervalle temporel de programmation (70) caractérisant une zone de pause (17) le long de l'axe temporel entre un premier ticket (40, 50) et un deuxième ticket (50, 60, 60', 60"), qui succède dans le temps à ce premier ticket (40, 50), est au moins en partie fermé, automatiquement ou de manière déclenchée par un utilisateur, en déplaçant le deuxième ticket (50, 60, 60', 60") en direction du premier ticket (40, 50), à savoir vers la gauche le long de l'axe temporel s'étendant dans la direction x, au moyen des étapes suivantes :
a) détermination de la présence d'au moins un intervalle de programmation (70) entre deux tickets (40, 50, 60, 60', 60") se succédant dans le temps,
b) ouverture d'une interface de dialogue relative à l'intervalle de programmation (70) déterminé, et
c) fermeture, au moins en partie, de l'intervalle de programmation (70) déterminé en fonction d'une demande de fermeture, sachant que
• la demande de fermeture détermine la/les zone(s) de cuisson, le(s) niveau(x) de cuisson dans lesquels des tickets (60, 60', 60") doivent être déplacés,
• la demande de fermeture est déterminée en fonction d'un paramètre d'optimisation, de telle sorte que
l'étape c) de la fermeture au moins en partie de l'intervalle de programmation (70) déterminé comprend un avancement dans le temps de tous les programmes sélectionnés pour la zone de cuisson, pour le niveau de cuisson ou pour l'espace de cuisson dans lequel l'intervalle de programmation (70) a été déterminé, de manière optimisée du point de vue du temps, de la qualité ou de la perte de poids.

2. Procédé selon 1a revendication 1, **caractérisé en ce que**
à chaque programme sélectionné est associée une zone de programme (4, 5, 15, 16) le long de l'axe temporel, et
chaque ticket (40, 50, 60, 60', 60") est affiché dans la zone de programme (4, 5, 15, 16) associée, sachant que
• l'étendue des zones de programme (4, 5, 15, 16) le long de l'axe temporel reste constante pendant le déroulement des zones de programme respectives, ou
• l'étendue d'un ticket (40) parallèlement à l'axe temporel est automatiquement adaptée à chaque modification du temps nécessaire pour le programme respectif, à partir de la sélection et/ou pendant le déroulement de celui-ci, qui résulte d'une saisie de l'utilisateur et/ou d'une détermination du temps nécessaire effectuée à au moins deux instants pendant le déroulement.

3. Procédé selon la revendication 2, **caractérisé en ce que**
l'étendue des zones de programme (4, 5, 15, 16) le long de l'axe temporel est déterminée conformément à la durée maximale des programmes respectifs, ou un ticket (40) relatif à un programme non asservi au temps est composé d'une première zone déterminée par la durée minimale du programme et d'une deuxième zone rétrécissant pendant le déroulement des zones de programme.

4. Procédé selon la revendication 3, **caractérisé en ce que**
le ticket (40) présente, au début du déroulement du programme qu'il représente, une étendue le long de l'axe temporel caractérisant la durée maximale du programme.

5. Procédé selon l'une quelconque des revendications précédentes, **caractérisé en ce que** l'étape a) de détermination de l'intervalle de programmation (70) est effectuée à au moins deux, de préférence une pluralité, d'instants après la sélection des au moins deux programmes relatifs aux deux tickets se succédant dans le temps et/ou pendant le déroulement de ceux-ci.

6. Procédé selon l'une quelconque des revendications précédentes, **caractérisé en ce que**
• l'étape a) de détermination de l'intervalle de programmation (70) comprend une détermination d'une durée, ou
• l'étape a) de détermination de l'intervalle de programmation (70) comprend une comparaison avec une durée minimale, /ou
• l'étape a) de détermination de l'intervalle de programmation (70) comprend une comparaison avec une durée maximale.

7. Procédé selon l'une quelconque des revendications précédentes, **caractérisé en ce que** l'étape b) comprend un affichage de l'intervalle de programmation (70) déterminé, de préférence par une mise en évidence optique de la zone de pause (17) résultant de l'intervalle de programmation (70) déterminé et/ou de la zone de programme (16) suivant dans le temps l'intervalle de programmation (70) et pouvant être déplacée pour fermer l'intervalle de programmation.

8. Procédé selon l'une quelconque des revendications précédentes, **caractérisé en ce que** l'étape b) comprend une émission d'une information sur l'intervalle de programmation (70) déterminé, de préférence sous la forme de l'émission d'une durée, sur le dépassement de la durée minimale et/ou sur le dépassement de la durée maximale.

9. Procédé selon l'une quelconque des revendications précédentes, **caractérisé en ce que** l'étape b) d'ouverture de l'interface de dialogue relative à l'intervalle de programmation (70) déterminé dépend de la durée déterminée, du dépassement de la durée minimale déterminé et/ou du dépassement de la durée maximale déterminé.

10. Procédé selon l'une quelconque des revendications précédentes, **caractérisé en ce que** l'étape b) d'ouverture de l'interface de dialogue relative à l'intervalle de programmation (70) déterminé comprend l'affichage et/ou la mise en évidence optique d'au moins un élément de commande pour fermer l'intervalle de programmation.

11. Procédé selon une des revendications 8 à 10, **caractérisé en ce que**
• lors d'un dépassement de la durée minimale déterminé, une demande de fermeture est générée automatiquement, et/ou
• lors d'un dépassement de la durée maximale déterminé, un avertissement est émis, de préférence par le biais de l'interface de dialogue.

12. Procédé selon l'une quelconque des revendications précédentes, **caractérisé en ce que** la demande de fermeture détermine le degré de la fermeture de l'intervalle de programmation, la durée de la fermeture de l'intervalle de programmation et/ou l'instant de la fermeture de l'intervalle de programmation.

13. Procédé selon l'une quelconque des revendications précédentes, **caractérisé en ce que** la demande de fermeture détermine le ou les tickets (60, 60', 60") à déplacer et/ou le ou les tickets à ne pas déplacer.

14. Procédé selon l'une quelconque des revendications précédentes, **caractérisé en ce que** la demande de fermeture est déterminée en fonction d'un temps cible et/ou d'un temps réel.

15. Procédé selon l'une quelconque des revendications précédentes, **caractérisé en ce que** la demande de fermeture est optimisée et/ou modifiée par auto-apprentissage à partir d'une valeur par défaut.

16. Procédé selon l'une quelconque des revendications précédentes, **caractérisé en ce que**
• la demande de fermeture est déclenchée par un actionnement de l'élément de commande, et/ou
• la demande de fermeture est déclenchée par un geste, un survol, un balayage et/ou au moins deux contacts.

17. Procédé selon la revendication 16, **caractérisé en ce que**
au moins une ligne de capture (72) est affichée à l'extrémité de l'intervalle de programmation (70) ou l'intervalle de programmation (70) est limité par deux lignes de capture (71, 72) perpendiculaires à l'axe temporel.

18. Procédé selon l'une quelconque des revendications précédentes, **caractérisé en ce que** un attribut peut être affecté au premier, au deuxième et/ou à chaque autre ticket (40, 50, 60, 60', 60"), l'attribut étant déterminé par un temps, un coût et/ou des ressources.

19. Procédé selon la revendication 20, **caractérisé en ce que**
un ticket peut être fixé dans le temps par l'attribut de temps, de telle sorte qu'il ne peut pas être déplacé le long de l'axe temporel.

20. Procédé selon l'une quelconque des revendications précédentes, **caractérisé en ce que**
une pluralité d'intervalles de programmation (70) est présente, et
au moins un intervalle de programmation à fermer peut être sélectionné parmi la pluralité d'intervalles de programmation (70).

21. Procédé selon la revendication 20, **caractérisé en ce que**
lors de la fermeture d'au moins un des intervalles de programmation parmi la pluralité d'intervalles de programmation (70), au moins un autre intervalle de programmation parmi la pluralité d'intervalles de programmation (70) peut être pris en compte.

22. Appareil de cuisson configuré pour exécuter un procédé selon une des revendications 1 à 21, comprenant un dispositif d'affichage doté d'une zone d'affichage (1, 10) séparée ou commune pour chaque zone de cuisson ou niveau de cuisson dans un espace de cuisson.
